# EUROPÄISCHE PATENTSCHRIFT

(11) **EP 0 931 964 B1**
(45) Veröffentlichungstag und Bekanntmachung des Hinweises auf die Patenterteilung: **23.04.2003**
(21) Anmeldenummer: 98123988.2
(22) Anmeldetag: 17.12.1998
(51) Int. Cl.: F16K 11/07, F16K 27/04

(54) **Wegeventil**
Directional valve
Distributeur

(30) Priorität: 22.01.1998 DE 19802311
(43) Veröffentlichungstag der Anmeldung: 28.07.1999
(73) Patentinhaber: ROBERT BOSCH GMBH, 70442 Stuttgart (DE)
(72) Erfinder: Bonnabaud, Karine, 74800 La Roche sur Foron (FR); Ghimpu-Mundinger, Radu, 71229 Leonberg (DE)
(74) Vertreter: Maiwald Patentanwalts GmbH

(56) Entgegenhaltungen:
- EP-A- 0 152 620
- GB-A- 1 384 671
- US-A- 3 017 901
- US-A- 3 819 152

## Beschreibung

### Stand der Technik

Die Erfindung geht von einem Wegeventil entsprechend dem Oberbegriff des Anspruchs 1 aus. Ein derartiges Wegeventil ist beispielsweise aus der DE 34 20 127 A1 bereits bekannt. Dieses Wegeventil weist ein Ventilgehäuse mit einer mehrmals abgesetzten Hauptbohrung auf. In dieser Hauptbohrung ist ein Kolbenschieber längsbeweglich angeordnet. Zu dessen Führung und zur Abdichtung von Arbeitskammern, die durch den Kolbenschieber gesteuert werden, sind Funktionselemente vorgesehen. Diese Funktionselemente haben ein einseitig offenes, käfigartiges Gehäuse mit einem darin eingesetzten Dichtelement. Das Dichtelement wirkt mit den Umfangsflächen des Kolbenschiebers zusammen. Eine ortsfeste Fixierung der Funktionselemente im Ventilgehäuse wird mittels einer leichten Preßverbindung zwischen der Hauptbohrung und dem Gehäuse der Dichtelemente in Verbindung mit einer anschließenden Verklebung erreicht. Fehldosierungen der Klebstoffmenge können dabei allerdings zu einer unzureichenden Fixierung bzw. zu einer Klebstoffbenetzung des Dichtelements führen. Zudem stellt die Verklebung bei der Herstellung des Wegeventils einen Zusatzaufwand dar. Für die Verklebung sind ferner im Ventilgehäuse Öffnungen und Kanäle vorhanden, die dessen Herstellung verteuern. Des weiteren erhöht die Mehrteiligkeit der Funktionselemente den Montageaufwand.

Aus der EP 0 472 910 A1 ist eine zweite Bauart eines Wegeventils bekannt, dessen Gehäuse topfförmig ausgebildet ist und eine zylindrische Schieberbohrung aufweist. Die Funktionselemente zur Führung und Abdichtung des Schiebers sind in dieses Gehäuse eingepreßt. Um deren Positionsgenauigkeit sicherzustellen, ist demzufolge der Einpreßvorgang wegüberwacht durchzuführen. Dies erhöht den Montageaufwand. Beim Einpreßvorgang des innersten, d.h. dem Boden des Gehäuses zugewandten Funktionselements kann es aufgrund des relativ langen Einpreßwegs zu einer Beschädigung der Gehäusewandung kommen. Dadurch ist die Preßung der nachfolgenden Funktionselemente, insbesondere des zuletzt eingepreßten Funktionselements verhältnismäßig undefiniert.

### Vorteile der Erfindung

Demgegenüber weist das Wegeventil mit den kennzeichnenden Merkmalen des Anspruchs 1 den Vorteil auf, daß es auf relativ einfache Art und Weise zu montieren und aus einer geringen Anzahl von Einzelteilen aufgebaut ist. Diese Einzelteile sind preisgünstig spanlos herstellbar und sind verhältnismäßig einfach aufgebaut.

Die Führung des Schiebers erfolgt mittels massiver metallischer Hülsen, die in einem automatisierbaren Arbeitsgang auf Anschlag in das Gehäuse eingepreßt werden. Beschädigungsgefahren für die Wandung der Schieberbohrung bestehen aufgrund ihres mehrfach abgesetzten Innendurchmessers dabei nicht. Die Hülsen sind mit umfangsseitigen Dichtkanten versehen, so daß auf separate Dichtelemente zwischen dem Gehäuse und den Hülsen verzichtet werden kann. Dies spart Teile- und Montagekosten ein und reduziert den Bauraum des Wegeventils. Die die Durchströmung des Wegeventils bestimmenden Kanten der Hülsen sind relativ einfach strömungstechnisch optimierbar, so daß das Wegeventil bei relativ kurzer Bauweise verhältnismäßig hohe Durchflüsse von Druckmittel erlaubt. Das Wegeventil zeichnet sich ferner durch eine hohe Flexibilität bezüglich der Anordnung seiner Anschlüsse auf.

Weitere Vorteile oder vorteilhafte Weiterbildungen der Erfindungen ergeben sich aus dem Unteransprüchen und der Beschreibung.

### Zeichnung

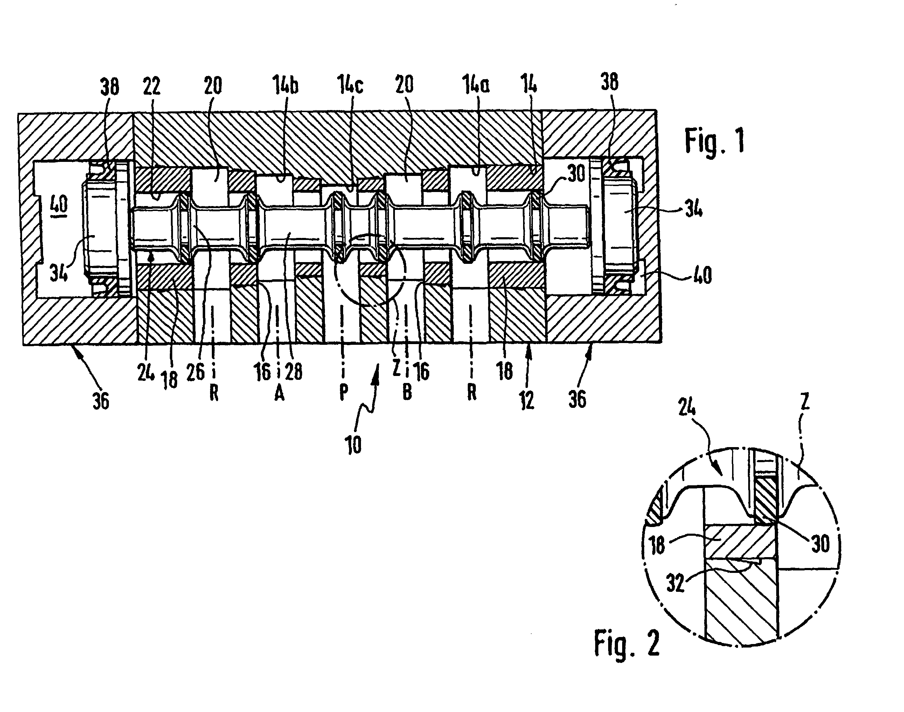

Ein Ausführungsbeispiel der Erfindung ist in der Zeichnung dargestellt und in der nachfolgenden Beschreibung näher erläutert. Figur 1 zeigt das erfindungsgemäße Wegeventil in einem Längsschnitt, in Figur 2 ist das Detail Z nach Figur 1 vergrößert dargestellt.

### Beschreibung des Ausführungsbeispiels

Figur 1 zeigt ein Wegeventil 10 exemplarisch in 5/2-Bauweise, das insbesondere für pneumatische Anwendungen vorgesehen ist, ohne jedoch zwangsweise darauf eingeschränkt zu sein.

Das Wegeventil 10 weist ein einteiliges Gehäuse 12 mit einer durchgehenden Längsausnehmung 14 zylindrischen Querschnitts auf. Diese Längsausnehmung 14 ist in ihrem Innendurchmesser von außen nach innen mehrfach abgesetzt. Die im Durchmesser größten Abschnitte 14a befinden sich im Bereich der seitlichen Öffnungen der Längsausnehmung 14, während der im Durchmesser kleinste Abschnitt 14c in der Mitte des Gehäuses 12 liegt.

Die Übergänge zwischen den einzelnen Abschnitten 14a bis 14c sind zur Ausbildung von Anlageschultern 16 rechtwinklig ausgeführt. An den Anlageschultern 16 liegen Hülsen 18 mit einer ihrer Stirnflächen seitlich an. Die Hülsen 18 sind in ihrem Außendurchmesser auf die ihnen zugeordneten Innendurchmesser der Abschnitte 14a-c derart abgestimmt, daß zwischen ihnen und der Wandung der Längsausnehmung 14 eine Preßverbindung besteht. Durch diese Preßverbindung sind die Hülsen 18 ortsfest im Gehäuse 12 fixiert. Als Hülsen 18 werden massive ringförmige Bauteile mit identischen Innendurchmessern verwendet, die bei der Montage des Wegeventils 10 durch die Öffnungen der Längsausnehmung 14 hindurch von beiden Stirnseiten in das Gehäuse 12 eingeführt werden.

Die Hülsen 18 sind aufgrund der Position der Anlageschultern 16 mit axialem Abstand zueinander angeordnet, wodurch im Inneren des Gehäuses 12 Arbeitskammern 20 entstehen. Diese Arbeitskammern 20 sind über gehäuseseitige Kanäle mit dem Zulaufanschluß P, dem Rücklaufanschluß R oder mit den Motoranschlüssen A, B verbunden. Im Ausführungsbeispiel ist der Zulaufanschluß P beispielhaft der mittlere Anschluß. Zu beiden Seiten dieses Zulaufanschlusses P sind die Motoranschlüsse A und B plaziert. Die äußersten Anschlüsse des Gehäuses 12 führen zum Rücklauf R.

Exemplarisch sind im Ausführungsbeispiel alle Anschlüsse P, A, B, R auf einer gemeinsamen Außenseite des Gehäuses 12 angeordnet. Eine Anordnung an gegenüberliegenden Außenseiten des Gehäuses 12 wäre jedoch ebenso denkbar.

Die untereinander identischen Innendurchmesser der Hülsen 18 bilden eine durch die Arbeitskammern 20 mehrfach unterbrochene Schieberbohrung 22 aus. In dieser Schieberbohrung 22 ist zur Steuerung des Druckmittelflusses durch das Wegeventil 10 ein Schieber 24 längsbeweglich geführt. Der Schieber 24 erstreckt sich über die gesamte Länge der Schieberbohrung 22 und weist eine der Anzahl der eingepreßten Hülsen 18 entsprechende Anzahl von Kolbenabschnitten 26 auf. Diese Kolbenabschnitte 26 sind mittels halsförmigen Verbindungsabschnitten 28 miteinander fest verbunden. Die im Außendurchmesser gegenüber den Verbindungsabschnitten 28 verdickt ausgebildet Kolbenabschnitte 26 sind umfangsseitig mit Dichtelementen 30 versehen. Abhängig von der momentanen Stellung des Schiebers 24 wird mittels diesen Kolbenabschnitten 26 eine Druckmittelverbindung zwischen zwei benachbarten Arbeitskammern 20 freigegeben oder verschlossen. Die an den Kolbenabschnitten 26 angeordneten Dichtelemente 30 können als Einzelteile auf die Kolbenabschnitte 26 des Schiebers 24 aufgesteckt oder alternativ dazu aufvulkanisiert sein. Dies ist insbesondere bei einem in Kunststoff ausgeführten Schieber 24 vorteilhaft.

Um eine unerwünschte Druckmittelleckage zwischen zwei benachbarten Arbeitskammern 20 über den Spalt zwischen den Umfangswandungen der Hülsen 18 und der Innenwandung der Längsausnehmung 14 zu vermeiden, sind die Hülsen 18 an ihrem Außenumfang gemäß Figur 2 mit umlaufenden Dichtkanten 32 versehen. Diese Dichtkanten 32 steigen entgegen der Einpreßrichtung der Hülsen 18 keilförmig an und schneiden im Verlauf des Einpreßvorgangs in die Wandung der Längsausnehmung 14 ein. Dadurch wird eine zuverlässige Abdichtung, verbunden mit einer zusätzlichen Lagefixierung der Hülsen 18 ermöglicht.

Eine Betätigung des Schiebers 24 erfolgt im Ausführungsbeispiel über Betätigungskolben 34, die beispielhaft an beiden Enden des Gehäuses 12 angeordnet sind. Diese Betätigungskolben 34 sind in den Innenräumen von topfförmigen Abschlußkörpern 36 beweglich geführt. Die Betätigungskolben 34 sind mit ringförmigen Lippendichtungen 38 versehen und dichten dadurch einen auf nicht dargestellte Weise mit Druckmittel beaufschlagbaren Druckraum 40 ab. Die Abschlußkörper 36 sind auf nicht erkennbare Weise druckdicht am Gehäuse 12 befestigt und verschließen die seitlichen Öffnungen der Längsausnehmung 14.

Selbstverständlich sind Weiterbildungen oder Ergänzungen am beschriebenen Ausführungsbeispiel möglich. Diesbezüglich ist anzumerken, daß das Gehäuse 12 besonders preisgünstig und ohne spanende Nachbearbeitung spritzgußtechnisch herstellbar ist. Als Material bietet sich hierfür insbesondere Kunststoff an, es ist jedoch auch Aluminium einsetzbar. Das Material der Hülsen 18 muß in beiden Fällen für eine zuverlässige Einpreßung im Gehäuse 12 einen höheren Elastizitätsmodul als der Werkstoff des Gehäuses 12 aufweisen. Bei einem Gehäuse 12 aus Kunststoff bietet sich demnach die Verwendung von Aluminium für die Hülsen 18 an, während bei einem Gehäuse 12 aus Aluminium Hülsen 18 aus Stahl einzusetzen sind.

Ebenso denkar wäre es, die Längsausnehmung 14 in ihrem Innendurchmesser statt, wie beschrieben, von beiden Stirnseiten des Gehäuses 12 ausgehend nach innen mehrfach schrittweise zu verkleinern, diese schrittweise Verkleinerung des Innendurchmessers stetig, d.h. von der einen Stirnseite des Gehäuses 12 zur anderen Strinseite hin auszuführen. Der im Durchmesser größte Abschnitt 14a würde in diesem Fall an der ersten Stirnseite und der im Durchmesser kleinste Abschnitt 14c an der dazu gegenüberliegenden zweiten Stirnseite des Gehäuses 12 liegen.

## Patentansprüche

1. Wegeventil (10), insbesondere für pneumatische Anwendungen, mit einem Gehäuse (12) das eine durchgehende Ausnehmung (14) aufweist, die an ihren beiden Enden von Abschlußkörpern (36) verschlossen ist, mit zumindest einem Zulaufanschluß (P), einem Rücklaufanschluß (R) und einem Motoranschluß (A, B), die in gegeneinander und nach außen abgedichteten Arbeitskammern (20) des Gehäuses (12) munden und mit einem Schieber (24), der von axial in der Ausnehmung (14) beabstandet angeordneten Lagerverbänden (18) beweglich geführt ist und der zur Steuerung eines Druckmittelflusses durch die Arbeitskammern (20) wenigstens einen Kolbenabschnitt (26) aufweist, **dadurch gekennzeichnet, daß** die Lagerverbände massive, metallische Hülsen (18) sind, die ortsfest in die Ausnehmung (14) eingepreßt sind und daß der wenigstens eine Kolbenabschnitt (26) des Schiebers (24) mindestens ein am Umfang angeordnetes Dichtelement (30) aufweist, das mit der Innenwandung dieser Hülsen (18) zusammenwirkt.

2. Wegeventil nach Anspruch 1, **dadurch gekennzeichnet, daß** die Ausnehmung (14) zur Ausbildung von Schultern (16) in ihrem Innendurchmesser mehrmals abgesetzt ist und daß die Hülsen (18) mit jeweils einer ihrer Seitenflächen an den Schultern (16) der Ausnehmung (14) anliegen.

3. Wegeventil nach einem der Ansprüche 1 oder 2, **dadurch gekennzeichnet, daß** die Hülsen (18) unterschiedliche Außendurchmesser haben und an ihrem Umfang wenigstens eine umlaufende Dichtkante (32) aufweisen.

4. Wegeventil nach einem der Ansprüche 1 bis 3, **dadurch gekennzeichnet, daß** das Gehäuse (12) des Wegeventils (10) einstückig ausgebildet und spanlos hergestellt ist.

5. Wegeventil nach Anspruch 4, **dadurch gekennzeichnet, daß** das Gehäuse (12) spritzgußtechnisch herstellbar ist und aus Aluminium bzw. aus Kunststoff besteht.

6. Wegeventil nach einem der Ansprüche 1 bis 5, **dadurch gekennzeichnet, daß** der Stoff der Hülsen (18) einen höheren Elastizitätsmodul als der Stoff des Gehäuses (12) hat.

7. Wegeventil nach einem der Ansprüche 1 bis 6, **dadurch gekennzeichnet, daß** das Wegeventil (10) fünf Anschlüsse für Zulauf (P), Rücklauf (R ) und Motor (A, B) aufweist, die insbesondere an einer gemeinsamen Außenseite des Gehäuses (12) angeordnet sind.

8. Wegeventil nach einem der Ansprüche 1 bis 7, **dadurch gekennzeichnet, daß** der Schieber (24) als Hohl- oder als Vollschieber aus Aluminium oder Messing gefertigt ist und daß die Dichtelemente (30) auf diesem Schieber (24) angeordnet sind.

9. Wegeventil nach einem der Ansprüche 1 bis 8, **dadurch gekennzeichnet, daß** das Wegeventil (10) als 5/2-Wegeventil ausgebildet ist.

10. Wegeventil nach Anspruch 2, **dadurch gekennzeichnet, daß** die Ausnehmung (14) an den beiden Stirnseiten des Gehäuses (12) den größten Innendurchmesser und in der Mitte der Ausnehmung (14) den kleinsten Innendurchmesser aufweist.

## Claims

1. Directional control valve (10), in particular for pneumatic applications, comprising
a housing (12) having a through recess (14), which is closed at its both ends by closing bodies (36),
at least one supply connection (P), a backflow connection (R) and a motor connection (A, B) leading to working chambers (20) of housing (12), wherein the working chambers (20) are sealed outwardly and with respect to each another, and
a slider (24) being movably guided by bearing systems (18), the bearing systems being axially arranged and spaced apart in the recess (14) and which has at least one piston portion (26) for controlling a pressure fluid flow through the working chambers (20),
**characterized in that** the bearing systems (18) are solid, metallic bushings (18) being fixedly pressed into the recess (14) and that the at least one piston portion (26) of the slider (24) comprises at least one sealing element (30) which is arranged at the circumference and which interacts with the inner wall of the bushings (18).

2. Directional control valve according to claim 1,
**characterized in that** the recess (14) is several times offset in its inner diameter to form shoulders (16) and that the lateral faces of the bushings (18) abut to the shoulders (16) of the recess (14).

3. Directional control valve according to one of claims 1 or 2,
**characterized in that** the bushings (18) have different outer diameters and at least have one circumferential sealing edge (32) at their circumference.

4. Directional control valve according to one of claims 1 to 3,
**characterized in that** the housing (12) of the directional control valve (10) is formed integrally and formed without cutting.

5. Directional control valve according to claim 4,
**characterized in that** the housing (12) is producible by injection moulding and is made of aluminium or plastics.

6. Directional control valve according to one of claims 1 to 5,
**characterized in that** the elastic modulus of the material of the bushings (18) exceeds the elastic modulus of the material of the housing (12).

7. Directional control valve according to one of claims 1 to 6,
**characterized in that** the directional control valve (10) comprises five connections for supply (P), backflow (R) and motor (A, B), wherein these connections are in particular are arranged on one common outer face of the housing (12).

8. Directional control valve according to one of claims 1 to 7,
**characterized in that** the slider (24) is manufactured as hollow or solid slider of aluminium or brass and that the sealing elements (30) are arranged on this slider (24).

9. Directional control valve according to one of claims 1 to 8,
**characterized in that** the directional control valve (10) is a 5/2-directional control valve (10).

10. Directional control valve according to claim 2,
**characterized in that** the recess (14) has the maximum inner diameter on both ends of the housing (12) and the minimum inner diameter in the middle of the recess (14).

## Revendications

1. Distributeur (10), en particulier pour des charges pneumatiques, comportant un boîtier (12) présentant un creux traversant (14) fermé en ses deux extrémités par des corps de fermeture (36), avec, au moins, un raccordement d'arrivée (P), un raccordement de retour (R) et un raccordement de moteur (A, B), qui débouchent dans des chambres de travail (20) du boîtier (12), étanchéisées les unes par rapport aux autres ainsi que par rapport à l'extérieur, et avec un tiroir (24) conduit de manière mobile par des groupes de supports (18) disposés de manière espacée axialement dans le creux (14) et qui, pour commander un courant de liquide hydraulique au travers des chambres de travail (20), présente au moins une section de piston (26), **caractérisé en ce que** les groupes de supports sont des étuis (18) métalliques massifs emmanchés dans le creux (14) et de positionnement fixe et que la section, au moins, de piston (26) du tiroir (24) présente au moins un élément d'étanchéité (30) disposé sur le périmètre, agissant conjointement avec la paroi intérieure desdits étuis (18).

2. Distributeur selon la revendication 1, **caractérisé en ce que** le diamètre intérieur du creux (14) est réduit plusieurs fois pour former des épaulements (16) et que les étuis (18) s'apposent aux épaulements (16) du creux (14) par chaque fois une de leurs surfaces latérales.

3. Distributeur selon l'une des revendications 1 ou 2, **caractérisé en ce que** les étuis (18) ont des diamètres extérieurs différents et présentent sur leur périmètre au moins une arête étanche (32) les entourant.

4. Distributeur selon l'une des revendications 1 à 3, **caractérisé en ce que** le boîtier (12) du distributeur (10) est monobloc et fabriqué sans enlèvement de copeaux.

5. Distributeur selon la revendication 4, **caractérisé en ce que** le boîtier (12) peut se fabriquer par moulage par injection et est composé d'aluminium ou de matière plastique.

6. Distributeur selon l'une des revendications 1 à 5, **caractérisé en ce que** le matériau des étuis (18) possède un module d'élasticité supérieur au matériau du boîtier (12).

7. Distributeur selon l'une des revendications 1 à 6, **caractérisé en ce que** le distributeur (10) présente cinq raccordements pour l'arrivée (P), le retour (R) et le moteur (A, B), disposés en particulier sur un côté extérieur commun du boîtier (12).

8. Distributeur selon l'une des revendications 1 à 7, **caractérisé en ce que** le tiroir (24) est réalisé en aluminium ou en laiton en tant que tiroir creux ou plein et que les éléments d'étanchéité (30) sont disposés sur ledit tiroir (24).

9. Distributeur selon l'une des revendications 1 à 8, **caractérisé en ce que** le distributeur (10) est formé en tant que distributeur 5/2.

10. Distributeur selon la revendication 2, **caractérisé en ce que** le creux (14) présente le plus grand diamètre intérieur aux deux faces frontales du boîtier (12) et le plus petit diamètre intérieur au milieu du creux (14).
